# EUROPÄISCHE PATENTSCHRIFT

(11) **EP 1 322 689 B1**
(45) Veröffentlichungstag und Bekanntmachung des Hinweises auf die Patenterteilung: **22.02.2006**
(21) Anmeldenummer: 01969801.8
(22) Anmeldetag: 01.10.2001
(51) Int. Cl.: C08G 18/67, C08G 18/81, C09D 175/16

(54) **LÖSEMITTELHALTIGES, THERMISCH UND MIT AKTINISCHER STRAHLUNG HÄRTBARES MEHRKOMPONENTENSYSTEM UND SEINE VERWENDUNG**
MULTI-COMPONENT SYSTEM CONTAINING SOLVENTS, HARDENABLE BY THERMAL AND ACTINIC RADIATION AND THE USE THEREOF
SYSTEME A PLUSIEURS COMPOSANTS CONTENANT DES SOLVANTS ET DURCISSABLE PAR ACTION THERMIQUE ET PAR RAYONNEMENT ACTINIQUE, ET SON UTILISATION

(30) Priorität: 02.10.2000 DE 10048847
(43) Veröffentlichungstag der Anmeldung: 02.07.2003
(73) Patentinhaber: BASF Coatings AG, 48165 Münster (DE); Nienhaus, Egbert, 59387 Acheberg (DE); Lettmann, Bernhard, 48317 Drensteinfurt (DE)
(72) Erfinder: NIENHAUS, Egbert, 59387 Ascheberg (DE); LETTMANN, Bernhard, 48317 Drensteinfurt (DE)
(74) Vertreter: Fitzner, Uwe
(86) Internationale Anmeldenummer: PCT/EP2001/011311
(87) Internationale Veröffentlichungsnummer: WO 2002/031015

(56) Entgegenhaltungen:
- EP-A- 0 549 116
- EP-A- 0 928 800
- EP-A- 0 952 170
- DE-A- 19 818 735
- DE-A- 19 860 041
- US-A- 4 342 793

## Beschreibung

Die vorliegende Erfindung betrifft ein neues lösemittelhaltiges, thermisch und mit aktinischer Strahlung härtbares Mehrkomponentensystem. Außerdem betrifft die vorliegende Erfindung die Verwendung des neuen Mehrkomponentensystems als Beschichtungsstoff, Klebstoff oder Dichtungsmasse. Des weiteren betrifft die vorliegende Erfindung die Verwendung der neuen Beschichtungsstoffe für die Automobilerstlackierung, die Autoreparaturlackierung, die Lackierung von Möbeln, Türen, Fenstern oder Bauwerken im Innen- und Außenbereich sowie für die industrielle Lackierung, inklusive Coil Coating, Container Coating und die Beschichtungen oder Imprägnierung elektrotechnischer Bauteile.

Hier und im folgenden wird unter aktinischer Strahlung elektromagnetische Strahlung wie nahes Infrarot (NIR), sichtbares Licht, UV-Strahlung oder Röntgenstrahlung, insbesondere UV-Strahlung, oder Korpuskularstrahlung wie Elektronenstrahlung verstanden.

Von der Fachwelt wird die Härtung mit Hitze und aktinischer Strahlung auch kurz als Dual-Cure bezeichnet.

Ein Dual-Cure-Mehrkomponentensystem ist beispielsweise aus der europäischen Patentanmeldung EP 0 928 800 A 1 bekannt. Es enthält ein Urethan(meth)acrylat mit freien Isocyanatgruppen und (Meth)Acryloylgruppen, einen Photoinitiator und eine isocyanatreaktive Verbindung, insbesondere ein Polyol oder Polyamin. Ein Bestandteil, der sowohl isocyanatreaktive funktionelle Gruppen als auch funktionelle Gruppen mit mindestens einer mit aktinischer Strahlung aktivierbaren Bindung werden nicht eingesetzt. Dieser Dual-Cure-Beschichtungsstoff bietet zwar die Möglichkeit, die Eigenschaftsprofile von Beschichtungsstoff und von Beschichtung zu variieren und gezielt an unterschiedliche Verwendungszwecke anzupassen, indes ist seine Ablüftzeit noch zu lang und seine Anfangshärte in den Schattenzonen komplex geformter dreidimensionaler Substrate, die durch die aktinische Strahlung nicht ohne größeren apparativen Aufwand erreicht werden, zu gering.

Außerdem sind Dual-Cure-Mehrkomponentensysteme aus der deutschen Patentanmeldung DE 198 18 735 A 1 bekannt. Diese enthalten obligatorisch
- ein oder mehrere radikalisch polymerisierbare Doppelbindungen aufweisende Verbindungen (A), die zudem zusätzlich mindestens eine weitere i. S. einer Additions- und/oder Kondensationsreaktion reaktive funktionelle Gruppen enthalten, und
- ein oder mehrere radikalisch polymerisierbare Doppelbindungen aufweisende Verbindungen (B), die zudem zusätzlich mindestens eine weitere i. S. einer Additions- und/oder Kondensationsreaktion reaktive funktionelle Gruppe enthalten, wobei die zusätzliche reaktive funktionelle Gruppe komplementär bzw. reaktiv ist gegenüber den zusätzlichen reaktiven funktionellen Gruppen der Verbindungen (A).

Darüber hinaus können sie mindestens eine monomere, oligomere und/oder polymere Verbindung (C) mit mindestens einer gegenüber den zusätzlich zu den radikalisch polymerisierbare Doppelbindungen vorhandenen funktionellen Gruppen der Verbindungen (A) oder (B) i. S. einer Additions- und/oder Kondensationsreaktion reaktive funktionelle Gruppe enthalten.

Die in der Patentanmeldung aufgeführten Vorteile, die angeblich alle darin beschriebenen Systeme aufweisen sollen, erschöpfen sich jedoch in allgemeinen Angaben und werden nicht durch ein konkretes Beispiel untermauert. Hiervon abgesehen, wird nicht abgegeben, in welchen Mindestmengen die zusätzlichen reaktiven funktionellen Gruppen in den Verbindungen vorliegen sollen.

Aufgabe der vorliegenden Erfindung ist es, ein neues Dual-Cure-Mehrkompontensystem zu finden, das die Nachteile des Standes der Technik nicht mehr länger aufweist, sondern das eine geringe Ablüftzeit hat Außerdem sollen die damit hergestellten Beschichtungen eine hohe Anfangshärte auch in den problematischen Schattenzonen komplex geformter dreidimensionaler Subtrate haben.

Außerdem soll das neue Dual-Cure-Mehrkompontensystem sowohl als Beschichtungsstoff als auch als Klebstoff und Dichtungsmasse geeignet sein.

Darüberhaus soll der neue Beschichtungsstoff hervorragend für die Automobilerstlackierung, die Autoreparaturlackierung, die Lackierung von Möbeln Türen, Fenstern oder Bauwerken im Innen- und Außenbereich sowie für die industrielle Lackierung, inklusive Coil Coating, Container Coating und die Beschichtungen oder Imprägnierung elektrotechnischer Bauteile geeignet sein.

Die aus dem neuen Dual-Cure-Mehrkomponentensystem hergestellten Beschichtungen, Klebschichten und Dichtungen sollen dabei eine hohe Kratzfestigkeit, eine sehr gute Chemikalien-, Benzin-, Lösemittel- und Etch- und Witterungsbeständigkeit aufweisen sowie keine Risse zeigen.

Die Klebschichten und Dichtungen sollen auch unter extremen und/oder rasch wechselnden klimatischen Bedingungen eine dauerhafte Klebkraft bzw. eine dauerhafte Dichtungsfähigkeit aufweisen.

Die Beschichtungen sollen außerdem hervorragend als Klarlackierungen im Rahmen farb- und/oder effektgebender Mehrschichtlackierungen geeignet sein. Dabei sollen die neuen Klarlackierungen eine hohe Anfangshärte auch in den problematischen Schattenzonen komplex geformter dreidimensionaler Subtrate haben.

Demgemäß wurde das neue lösemittelhaltige, tShermisch und mit aktinischer Strahlung (Dual Cure) härtbares Mehrkomponenentensystem, enthaltend
(A) mindestens eine Komponente, enthaltend
   (A 1) mindestens einen Bestandteil mit mindestens 1,8 meq/g an isocyanatreaktiven funktionellen Gruppen
   (A 2) mindestens einen Bestandteil mit mindestens 1,8 meq/g an isocyanatreaktiven funktionellen Gruppen und mindestens einer funktionellen Gruppe mit mindestens einer mit aktinischer Strahlung aktivierbaren Bindung
   und
(B) mindestens eine Komponente, enthaltend mindestens ein Polyisocyanat (B 1).

Im folgenden wird das neue lösemittelhaltige, thermisch und mit aktinischer Strahlung härtbare Mehrkomponentensystem "ertindungsgemäßes Mehrkomponentensystem" bezeichnet.

*Die für das erfindungsgemäße Mehrkomponentensystem* geeignete Komponente (A) enthält mindestens einen Bestandteil (A 1) mit mindestens 1,8, bevorzugt mindestens 2,0 und insbesondere mindestens 2,1 meq/g an isocyanatreaktiven funktionellen Gruppen.

Beispiele geeigneter isocyanatreaktiver funktioneller Gruppen sind Thiol-, primäre oder sekundäre Amino-, Imino- oder Hydroxylgruppen, insbesondere Hydroxylgruppen.

Der Bestandteil (A 1) kann niedermolekular, oligomer oder polymer sein. Vorzugsweise ist er oligomer oder polymer.

Die Grundstrukturen der niedermolekularen Bestandteile (A 1) sind nicht kritisch, sondern können den unterschiedlichsten organischen Verbindungsklassen entstammen. Beispiele geeigneter Verbindungsklassen sind gegebenenfalls Heteroatome wie Sauerstoff, Stickstoff, Schwefel, Silizium oder Phosphor enthaltende Alkyl-, Cycloalkyl-, Alkylcycloalkyl-, Cycloalkylalkyl-, Aryl-, Alkylaryl-, Cycloalkylaryl- Arylalkyl- und/oder Arylcycloalkylverbindungen, die gegebenenfalls noch weitere Substituenten tragen, die indes bei der Herstellung der Bestandteile, ihrer Lagerung und/oder bei ihrer Anwendung nicht mit den mit aktinischer Strahlung aktivierbaren Bindungen reagieren dürfen.

Die Grundstrukturen der oligomeren oder polymeren Bestandteile (A 1) sind ebenfalls nicht kritisch und können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen. Hinsichtlich möglicherweise vorhandener Substituenten gilt das vorstehend Gesagte sinngemäß.

Beispiele gut geeigneter (Co)Polymerisate (A 1) sind Poly(meth)acrylate und partiell verseifte Polyvinylester.

Beispiele gut geeigneter Polyadditionsharze und/oder Polykondensationsharze (A 1) sind Polyester, Alkyde, Polyurethane, Polylactone, Polycarbonate, Polyether, Epoxidharz-Amin-Addukte, Polyharnstoffe, Polyamide oder Polyimide.

Erfindungsgemäß weisen die (Meth)Acrylatcopolymerisate, insbesondere die hydroxylgruppenhaltigen, besondere Vorteile auf und werden erfindungsgemäß besonders bevorzugt als Bestandteile (A 1) verwendet.

Die (Meth)Acrylatcopolymerisate (A 1) sind an sich bekannte Polymere. Ihre Herstellung weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von 50 bis 200°C.

Beispiele geeigneter (Meth)Acrylatcopolymerisate (A 1) und Copolymerisationsverfahren werden in den Patentanmeldungen DE 197 09 465 A I, DE 197 09 476 A 1, DE 28 48 906 A 1, DE 195 24 182 A 1, DE 198 28 742 A 1, DE 196 28 143 A 1, DE 196 28 142 A 1, EP 0 554 783 A 1, WO 95/27742, WO 82/02387 oder WO 98/02466 beschrieben.

In der Komponente (A) sind die Bestandteile (A 1) in breit variierenden Mengen enthalten. Vorzugsweise enthält die Komponente die Bestandteile (A 1) in einer Menge von 5 bis 60, bevorzugt 6 bis 55 und insbesondere 7 bis 50 Gew.-%, jeweils bezogen auf die Komponente (A).

Außerdem enthält die Komponente (A) mindestens einen, insbesondere einen, Bestandteil (A 2) mit mindestens 1,8, bevorzugt mindestens 2,0 und insbesondere mindestens 2,1 meq/g an isocyanatreaktiven funktionellen Gruppen und mindestens einer, vorzugsweise mindestens zwei und insbesondere drei funktionellen Gruppen mit mindestens einer mit aktinischer Strahlung aktivierbaren Bindung.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen werden die Doppelbindungen, insbesondere die Kohlenstoff-KohlenstoffDoppelbindungen ("Doppelbindungen"), bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbomenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylagruppen, von besonderem Vorteil und werden deshalb erfindungsgemäß ganz besonders bevorzugt verwendet.

Der Bestandteil (A 2) kann niedermolekular, oligomer oder polymer sein. Vorzugsweise ist er oligomer oder polymer.

Die Grundstruktur des Bestandteils (A 2) ist nicht kritisch. Es können die vorstehend bei der Bestandteil (A 1) beschriebenen Grundstrukturen verwendet werden.

Demnach entstammen die Bestandteile (A 2) den Oligomer- und/oder Polymerklassen der (meth)acrylfunktionellen (Meth)Acrylcopolymeren, Polyetheracrylaten, Polyesteracrylaten, Polyestern, Epoxyacrylaten, Urethanacrylaten, Aminoacrylaten, Melaminacrylaten, Silikonacrylaten und Phosphazenacrylaten und den entsprechenden Methacrylaten. Bevorzugt werden Bindemittel (al) eingesetzt, die frei von aromatischen Struktureinheiten sind. Bevorzugt werden daher Urethan(meth)acrylate, Phosphazen(meth)acrylate und/oder Polyester(meth)acrylate, besonders bevorzugt Urethan(meth)acrylate, insbesondere aliphatische Urethan(meth)acrylate, eingesetzt.

Die Herstellung von Urethan(meth)acrylaten (A 2) mit endständigen und/oder lateralen Doppelbindungen weist keine methodischen Besonderheiten auf, sondern wird im Detail in den Patentanmeldungen und Patenten DE 196 45 761 A, WO 98/10028, EP 0 742 239 A 1, EP 0 661 321 B 1, EP 0 608 021 B 1, EP 0 447 998 B 1, oder EP 0 462 287B 1 beschrieben. Außerdem sind diese Bestandteile handelsübliche Produkte und werden beispielsweise unter der Marke Rahn® 99-664 von der Firma Rahn vertrieben.

In der Komponente (A) sind die Bestandteile (A 2) in breit variierenden Mengen enthalten. Vorzugsweise enthält die Komponente ( die Bestandteile (A 1) in einer Menge von 10 bis 60, bevorzugt 15 bis 55 und insbesondere 20 bis 50 Gew.-%, jeweils bezogen auf die Komponente (A).

Darüber hinaus kann die Komponente (A) des Mehrkomponentensystems noch weitere übliche und bekannte Zusatzstoffe in wirksamen Mengen enthalten. Wesentlich ist, daß die Zusatzstoffe nicht die Dual-Cure-Vernetzungsreaktionen inhibieren oder völlig verhindern.

Beispiele geeigneter Zusatzstoffe sind Nanopartikel, thermisch oder mit aktinischer Strahlung härtbare Reaktiverdünner, niedrig siedende organische Lösemittel und hochsiedende organische Lösemittel ("lange Lösemittel"), Wasser, IIV-Absorber, Lichtschutzmittel, Radikalfänger, thermolabile indikalische Initiatoren, Photoinitiatoren und -Coinitiatoren, Vernetzungsmittel, wie sie in Einkomponentensystemen verwendet werden, Katalysatoren für die thermische Vernetzung, Entlüftungsmittel, Slipadditive, Polymerisationsinhibitoren, Entschäumer, Emulgatoren, Netz- und Dipergiermittel, Haftvermittler, Verlaufmittel, filmbildende Hilfsmittel, Sag control agents (SCA), rheologiesteuernde Additive (Verdicker), Flammschutzmittel, Sikkative, Trockungsmittel, Hautverhinderungsmittel, Korrosionsinhibitoren, Wachse, Mattierungsmittel, Vorstufen organisch modifizierter Keramikmaterialien oder zusätzliche Bindemittel.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie beispielsweise in den deutschen Patentanmeldungen DE 198 05 421 A 1, DE 198 09 643 A 1 oder DE 198 40 405 A 1 beschrieben werden.

Beispiele geeigneter mit aktinischer Strahlung härtbarer Reaktiverdünner sind die in Römpp Lexikon Lacke und Druckfarben, Georg Thieme Verlag, Stuttgart, New York, 1998, auf Seite 491 unter dem Stichwort, »Reakivverdünner«, oder in der Spalte 7, Zeilen 1 bis 26, der DE 198 18 715 A 1 beschriebenenen oder Reaktiverdünner mit mindestens 5, insbesondere 5, mit aktinischer Strahlung aktivierbaren Bindungen im Molekül wie beispielsweise Dipentaerythritolpentaacrylat.

Beispiele geeigneter niedrigsiedender organischer Lösemittel und hochsiedender organischer Lösemittel ("lange Lösemittel") sind Ketone wie Methylethlyketon, Methylisoamylketon oder Methylisobutylketon, Ester wie Ethylacetat, Butylacetat, Ethylethoxypropionat, Methoxypropylacetat oder Butylglykolacetat, Ether wie Dibutylether oder Ethylenglykol-, Diethylenglykol-, Propylenglykol-, Dipropylenglykol-, Butylenglykol- oder Dibutylenglykoldimethyl-, -diethyl- oder -dibutylether, N-Methylpyrrolidon oder Xylole oder Gemische aromatischer und/oder aliphatischer Kohlenwasserstoffe wie Solventnaphtha®, Benzin 135/180, Dipentene oder Solvesso®.

Beispiele geeigneter thermolabiler rädikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Dibutylzinndilaurat, Dibutylzinndioleat, Lithiumdecanoat, Zinkoctoat oder Bismutsalze wie Bismutlactat oder -dimethylolpropionat.

Beispiele geeigneter Photoinitiatoren und Coinitiatoren werden in Römpp Lexikon Lacke und Druckfarben, Georg Thieme Verlag Stuttgart, 1998, Seiten 444 bis 446, beschrieben.

Beispiele geeigneter zusätzlicher Vernetzungsmittel , wie sie in Einkomponentensystemem verwendet werden, sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden, blockierte Polyisocyanate, wie sie beispielsweise in den Patentschriften US 4,444,954 A, DE 196 17 086 A 1, DE 196 31 269 A 1, EP 0 004 571 A 1 oder EP 0 582 051 A 1 beschrieben werden, und/oder Tris(alkoxycarbonylamino)-triazine, wie sie in den Patentschriften US 4,939,213 A , US 5,084,541 A, US 5,288,865 A oder EP 0 604 922 A 1 beschrieben werden.

Beispiele für geeignete Entlüftunsmittel sind Diazadicycloundecan oder Benzoin.

Beispiele geeigneter Emulgatoren sind nicht ionische Emulgatoren, wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricyclodecandimethanol.

Beispiele für geeignete filmbildende Hilfsmittel sind Cellulose-Derivate wie Celluloseacetobutyrat (CAB).

Beispiele geeigneter transparenter Füllstoffe sind solche auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen.

Beispiele geeigneter Sag control agents sind Harnstoffe, modifizierte Harnstoffe und/oder Kieselsäuren, wie sie beispielsweise in den Literaturstellen EP 0 192 304 A 1, DE 23 59 923 A 1, DE 18 05 693 A 1, WO 94/22968, DE 27 51 761 C 1, WO 97/12945 oder "farbe + lack", 11/1992, Seiten 829 ff., beschrieben werden.

Beispiele geeigneter rheologiesteuemder Additive sind die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate wie Aluminium-Magnesium-Silikate, Natrium-Magnesium- und Natrium-Magnesium-Fluor-Lithium-Schichtsilikate des Montmorilonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

Ein Beispiel für ein geeignetes Mattierungsmittel ist Magnesiumstearat.

Beispiele geeigneter Vorstufen für organisch modifizierte Keramikmaterialien sind hydrolysierbare metallorganische Verbindungen insbesondere von Silizium und Aluminium.

Weitere Beispiele für die vorstehend aufgeführten Zusatzstoffe sowie Beispiele geeigneter UV-Absorber, Radikalfänger, Verlaufmittel, Flammschutzmittel, Sikkative, Trocknungsmittel, Hautverhinderungsmittel, Korrosionsinhibitoren und Wachse (B) werden in dem Lehrbuch »Lackadditive« von Johan Bieleman, Wiley-VCH, Weinheim, New York, 1998, im Detail beschrieben.

Die Herstellung der erfindungsgemäß zu verwendenden Komponente (A) weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder.

Die Komponente (B) des erfindungsgemäßen Mehrkomponentensystems enthält mindestens ein Polyisocyanat (B 1).

Die Polyisocyanate (B 1) enthält im statistischen Mitteln mindestens 2,0, bevorzugt mehr als 2,0 und insbesondere mehr als 3,0 Isocyanatgruppen pro Molekül. Die Anzahl der Isocyanatgruppen ist nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate (B 1) sind isocyanatgruppenhaltige Polyurethanpräpolymere, die durch Reaktion von Polyolen mit einem Überschuß an Diisocyanaten hergestellt werden können und bevorzugt niederviskos sind.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexytmethan-2,4'-diisocyanat, Tri-methylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4-oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentanmeldungen DE 44 14 032 A 1, GB 1220717 A 1, DE 16 18 795 A 1 oder DE 17 93 785 A 1 beschrieben wird, bevorzugt Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI.

Es können auch Isocyanurat-, Biuret-, Allophanat-, Iminooxadiazindion-, Urethan-, Harnstoff Carbodiimid und/oder Uretdiongruppen aufweisende Polyisocyanate (B 1) verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA 2,163,591 A, US-A-4,419,513, US 4,454,317 A, EP 0 646 608 A, US 4,801,675 A, EP 0 183 976 A 1, DE40 15 115 A 1, EP 0 303 150 A 1, EP 0 496 208 A 1, EP 0 524 500 A 1, EP 0 566 037 A 1, US 5,258,482 A 1, US 5,290,902 A 1, EP 0 649 806 A 1, DE 42 29 183 A loder EP 0 531 820 A 1 bekannt.

Der Gehalt der Komponente (B) an den Polyisocyanaten (B 1) kann breit variieren. In erster Linie richtet er sich nach der Viskosität, die für das Vermischen mit den weiteren Komponenten notwendig ist. Vorzugsweise liegt der Gehalt bei 20 bis 80, bevorzugt 30 bis 70 und insbesondere 35 bis 65 Gew.-%, bezogen auf die Komponente (B). Vorzugsweise enthält die Komponente (B) darüber hinaus noch mindestens eines der vorstehend beschriebenen organischen Lösemittel.

Darüber hinaus kann die Komponente (B) noch mindestens einen, insbesondere einen, Bestandteil (B 2), mit mindestens einer Isocyanatgruppe und mindestens einer funktionellen Gruppe mit mindestens einer mit aktinischer Strahlung aktivierbaren Bindung enthalten.

Diese Bestandteile (B 2) sind bekanntermaßen erhältlich durch die Umsetzung der vorstehend beschriebenen Diisocyanate und Polyisocyanate (B 1) mit Verbindungen, die mindestens eine, insbesondere eine, der vorstehend beschriebenen isocyanatreaktiven funktionellen Gruppen und mindestens eine, insbesondere eine, mit aktinischer Strahlung aktivierbare Bindung enthalten. Beispiele geeigneter Verbindungen dieser Art sind
- 2-Hydroxyethyl-, 2-Hydroxypropyl-, 3-Hydroxypropyl-, 3-Hydroxybutyl-, 4-Hydroxybutyl-, Bis(hydroxymethyl)cyclohexan-, Neopentylglykol-, Diethylenglykol-, Dipropylenglykol-, . Dibutylenglykol-, Triethylenglykolacrylat, -methacrylat, -ethacrylat, -crotonat, -cinnamat, - vinylether, -allylether, -dicyclopentadienylether, -norbornenylether, - isoprenylether, -isopropenylether oder -butenylether;
- Tnmethylolpropandi-, Glycerindi-, Trimethylolethandi-, Pentaerythrittri- oder Homopentaerythrittriacrylat, -methacrylat, -ethacrylat, -crotonat, - cinnamat, -vinylether, -allylether, -dicyclopentadienylether, - norbornenylether, -isoprenylether, -isopropenylether oder -butenylether; oder
- Umsetzungsprodukte aus cyclischen Estern, wie z.B. epsilon-Caprolacton, und den vorstehend beschriebenen hydroxylgruppenhaltige Monomeren; oder
- 2-Aminoethyl(meth)acrylat und/oder 3-Aminopropyl(meth)acrylat.

Methodisch gesehen weist die Herstellung dieser Bestandteile (B 2) keine Besonderheiten auf, sondern erfolgt wie beispielsweise in der europäischen Patentanmeldung EP 0 928 800 A 1 beschrieben.

Herstellung der Komponente (B) weist keine methodischen Besonderheiten auf, sondern erfolgt durch das Vermischen ihrer Bestandteile. Zur Einstellung einer niedrigen Viskosität können der Komponente (B) noch mindestens eines der vorstehend beschriebenen organischen Lösemittel zugemischt werden.

Enthält das erfindungsgemäße Mehrkomponentensystem lediglich die Komponenten (A) und (B), handelt es sich um ein Zweikomponentensystem. Indes können unterschiedliche Bestandteile der Einzelkomponenten (A) und/oder (B) getrennt von diesen gelagert und erst kurz vor der Applikation zu dem Mehrkomponentensystem vereinigt werden. Im allgemeinen wird das Zweikomponentensystem bevorzugt, weil es weniger Aufwand bei seiner Herstellung bereitet.

Die Herstellung der erfindungsgemäßen Mehrkomponentensysteme aus den vorstehend beschriebenen Komponenten (A) und (B) bietet keine methodischen Besonderheiten, sondern wird mit Hilfe der üblichen und bekannten, vorstehend beschriebenen Mischvorrichtungen und -verfahren oder mittels üblicher Zwei- oder Mehrkomponenten-Dosier- und -mischanlagen durchgeführt. Idealerweise erfolgt die Durchmischung per Hand, wenn es die Viskosität der Komponente (A) und (B) gestattet.

Das Gewichtsverhältnis der Komponente (A) zu Komponente (B) kann dabei breit variieren. Es richtet sich in erster Linie nach der Funktionalität und Konzentration der vorstehend beschriebenen reaktiven Bestandteile der Komponenten, insbesondere (A 1) und (A 2) einerseits und (B 1) andererseits. Der Fachmann kann daher die für jeden Einzelfall optimalen Gewichtsverhältnis anhand seines Fachwissens gegebenenfalls unter Zuhilfenahme einfacher orientierender Versuche leicht ermitteln. Vorzugsweise liegt das Gewichtsverhältnis bei 3: 1 bis 1: 3, bevorzugt 2,7: 1 bis 1: 2,7 und insbesondere 2,5: 1 bis 1: 2,5.

Die erfindungsgemäßen Mehrkomponentensysteme können den unterschiedlichsten Verwendungszwecken zugeführt werden. Vorzugsweise werden sie als Beschichtungsstoffen, Klebstoffe und Dichtungsmassen verwendet.

Die erfindungsgemäßen Beschichtungsstoffe, -klebstoffe und -dichtungsmassen dienen der Herstellung von Beschichtungen, Klebschichten und Dichtungen auf und/oder in grundierten und ungrundierten Substraten. Insbesondere dienen die erfindungsgemäßen Beschichtungsstoffe der Herstellung von Klarlackierungen, insbesondere von Klarlackierungen in farb- und/oder effektgebenden Mehrschichtlackierungen.

Methodisch weist die Applikation der erfindungsgemäßen Klarlacke keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen.

Als Substrate kommen Oberflächen, die durch eine Härtung der hierauf befindlichen Beschichtungsstoffe, Klebstoffe und/oder Dichtungsmassen unter Anwendung von Hitze und aktinischer Strahlung nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien.

Demnach sind die erfindungsgemäßen Beschichtungsstoffe, Klebstoffe und Dichtungsmassen auch für Anwendungen außerhalb der Automobilserienlackierung und Autoreparaturlackierung geeignet. Hierbei kommen sie insbesondere für die Lackierung, das Verkleben und/oder das Abdichten von Möbeln, Fenstern, Türen, Bauwerken im Innen- und Außenbereich und die industrielle Lackierung, inklusive Coil Coating, Container Coating und die Imprägnierung oder Beschichtung elektrotechnischer Bauteile, in Betracht. Im Rahmen der industriellen Lackierungen eignen sie sich für die Lackierung, das Verkleben und/oder das Abdichten praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische Elektrotauchlacke (KTL), insbesondere aber KTL, in Betracht.

Die Elektrotauchlackierung oder die Elektrotauchlackschicht kann mit einem Füller überschichtet werden, der entweder für sich alleine oder gemeinsam mit der Elektrotauchlackschicht gehärtet wird (Naß-in-naß-Verfahren). Die Überschichtung mit einem Füller erfolgt insbesondere in den Bereichen, die einer starken mechanischen Beanspruchung, wie beispielsweise durch Steinschlag, ausgesetzt sind.

Beispiele geeigneter kathodischer Elektrotauchlacke sowie ggf. von Naß-in-naß-Verfahren werden in der japanischen Patentanmeldung 1975-142501 (japanische Offenlegungsschrift JP 52-065534 A 2, Chemical Abstracts Referat Nr. 87: 137427) oder den Patentschriften und -anmeldungen US 4,375,498 A, US 4,537,926 A, US 4,761,212 A, EP 0 529 335 A 1, DE 41 25 459 A 1, EP 0 595 186 A 1, EP 0 074 634 A 1, EP 0 505 445 A 1, DE 42 35 778 A 1, EP 0 646 420 A 1, EP 0 639 660 A 1, EP 0 817 648 A 1, DE 195 12 017 C 1, EP 0 192 113 A 2, DE 41 26 476 A 1 oder WO 98/07794 beschrieben.

Desgleichen sind geeignete Füller, insbesondere wäßrige Füller, die auch als Steinschlagschutzgrundierungen oder Funktionsschichten bezeichnet werden, aus den Patentschriften und -anmeldungen US 4,537,926 A, EP 0 529 335 A 1, EP 0 595 186 A 1, EP 0 639 660 A 1, DE 44 38 504 A 1, DE 43 37 961 A J, WO 89,/10387, US 4,450,200 A, US 4,614,683 A oder WO 490/26827 bekannt.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit emem Plasma oder mit Beflammen, unterzogen oder mit einer Grundierung versehen werden.

Erfindungsgemäß werden zur Herstellung der erfindungsgemäßen Klarlackierungen die erfindungsgemäßen Klarlacke auf die vorstehend beschriebenen Substrate appliziert, wonach die resultierenden Klarlackschichten gehärtet werden.

Erfindungsgemäß werden zur Herstellung der erfindungsgemäßen Klebschichten und Dichtungen die erfindungsgemäßen Klebstoffe und Dichtungsmassen auf und/oder in die vorstehend beschriebenen Substrate appliziert. Vorzugsweise wird bei dem Verkleben von Substraten die zu verklebenden Oberflächen zweier oder mehrerer Substrate mit dem erfindungsgemäßen Klebstoff beschichtet, wonach die betreffenden Oberflächen ggf. unter Druck in Kontakt gebracht und die resultierenden Klebschichten gehärtet werden.

Bekanntermaßen erfolgt die Herstellung einer farb- und/oder effktgebenden Mehrschichtlackierung auf einem grundierten oder ungrundierten Substrat durch
(1) Applikation eines Basislacks auf das Substrat,
(2) Trocknung und/oder partielle Härtung oder vollständige Härtung der Basislackschicht,
(3) Applikation eines Klarlacks auf die getrocknete und/oder partiell gehärtete Basislackschicht oder die gehärtete Basislackierung und
(4) Gemeinsame Härtung der Klarlackschicht mit der Basislackschicht oder separate Härtung der Klarlackschicht.

Beispiele geeigneter Basislacke sind aus den Patentanmeldungen EP 0 089 497 A 1, EP 0 256 540 A 1, EP 0 260 447 A 1, EP 0 297 576 A 1, WO 96/12747, EP 0 523610A 1,EP 0 228 003 A 1, EP 0 397 806 A 1, EP 0 574 417 A 1, EP 0 531 510 A 1, EP 0 581 21 1 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1 oder EP 0 817 684, Spalte 5, Zeilen 31 bis 45, bekannt.

Im allgmeinen werden die Füllerlackschicht, Decklackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 20 bis 100 und insbesondere 25 bis 90 µm, im Falle der Decklackierung liegt sie bei 5 bis 90, vorzugsweise 10 bis 80, besonders bevorzugt 15 bis 60 und insbesondere 20 bis 50 µm, im Falle der Basislackierung liegt sie bei 5 bis 50, vorzugsweise 6 bis 40, besonders bevorzugt 7 bis 30 und insbesondere 8 bis 25 µm, und im Falle der Klarlackierungen liegt sie bei 10 bis 100, vorzugsweise 15 bis 90, besonders bevorzugt 20 bis 80 und insbesondere 25 bis 70 µm.

Die Aushärtung kann nach einer gewissen Ablüftzeit erfolgen. Sie dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 40°C und/oder durch Abblasen der Schichten unterstützt und/oder verkürzt werden, sofern hierbei keine Schädigungen oder Veränderungen der applizierten Schichten eintreten, etwa eine vorzeitige vollständige Vernetzung. Hierbei zeigen die erfindungsgemäßen Klarlackierungen eine vorteilhaft kurze Ablüftzeit von < 10, insbesondere < 5 Minuten. Dadurch wird insgesamt eine Verkürzung der Prozeßzeiten erzielt.

Erfindungsgemäß erfolgt die Aushärtung mit aktinischer Strahlung, insbesondere mit UV-Strahlung, und/oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet: werden.

Die Anlagen und Bedingungen dieser Härtungsmethoden werden beispielsweise in R. Holmes, U. V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei Raumtemperatur oder oberhalb der Raumtemperatur, vorzugsweise bei Temperaturen >40 °C, bevorzugt >50 während einer Zeit von 1 min bis zu mehreren Tagen.

Thermische Härtung und Härtung mit aktinischer Strahlung können gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Die erfindungsgemäßen Beschichtungsstoffe, Klebstoffe und Dichtungsmassen haben einen hohen Festkörpergehalt bei niedriger Viskosität und einer langen Standzeit.

Die Ablüftzeit der erfindungsgemäßen Mehrkomponentensysteme, insbesondere des erfindungsgemäßen Klarlacks, vor der Härtung ist sehr kurz, sodaß die Prozeßzeiten insgesamt verringert werden.

Die mit Hilfe der erfindungsgemäßen Mehrkomponentensysteme hergestellten Beschichtungen, Klebschichten und Dichtungen, insbesondere die erfindungsgemäßen Klarlackierungen, weisen auch in den Schattenbereichen der Substrate eine hohe Anfangshärte auf.

Die resultierenden erfindungsgemäßen Beschichtungen, insbesondere die Klarlackierungen und die sie enthaltenden farb- und/oder effektgebenden Mehrschichtlackierungen, weisen eine hohe Härte, Flexibilität, und Chemikalienbeständigkeit, einen hervorragenden Verlauf, keine Läufer, eine sehr gute Zwischenschichthaftung, einen hervorragenden optischen Gesamteindruck, eine sehr gute Witterungsbeständigkeit, eine sehr hohe Kratzfestigkeit und Abriebfestigkeit sowie eine sehr gute Polierbarkeit auf.

Die erfindungsgemäßen Klebschichten sind auf Dauer von hoher Klebkraft auch unter extremen und/oder sehr stark und rasch wechselnden klimatischen Bedingungen.

Die erfindungsgemäßen Dichtungen dichten auf Dauer vollständig gegen chemisch aggressive Stoffe ab.

Somit weisen die erfindungsgemäßen grundierten und ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, zusätzlich zu den vorstehend aufgeführten Vorteilen eine besonders lange Gebrauchsdauer auf, was sie wirtschaftlich besonders wertvoll macht.

### Beispiele und Vergleichsversuch

### Herstellbeispiel 1

### Die Herstellung eines thermisch härtbaren Methacrylatcopolymerisats

In einem Stahlreaktor, ausgerüstet mit Rührer, Rückflußkühler und zwei Zulaufgefäßen, wurden 185,6 Gewichtsteile Ethylethoxypropionat vorgelegt und unter Rühren auf 160°C erhitzt. Hiernach wurde eine Monomermischung aus 114,1 Gewichtsteilen Styrol, 136,9 Gewichtsteilen Methylmethacrylat,79,3 Gewichtsteilen Butylmethacrylat, 109 Gewichtsteile n-Butylacrylat und 164,1 Gewichtsteilen Hydroxyethylmethacrylat während vier Stunden gleichmäßig zudosiert. Gleichzeitig beginnend und parallel hierzu wurde eine Initiatormischung aus 35,8 Gewichtsteilen Ethylethoxypropionat und 36,2 Gewichtsteilen Di-tert.-butylperoxid gleichmäßig zudosiert. Nach einer Stunde wurde bei 110°C mit einer Initiatormischung aus 5,7 Gewichtsteilen Butylacetat und 0,5 Gewichtsteilen tert.-Butylperoxyethylhexanoat nachinitiiert. Hiernach wurde die resultierende Reaktionsmischung während einer Stunde bei 110°C gehalten. Danach wurde die Lösung bei 80°C mit Butylacetat auf einen Festkörpergehalt von 65 Gew.-% eingestellt. Die resultierende Lösung wies eine Viskosität von 15 dPas auf. Die Hydroxylzahl des Methacrylatcopolymerisats lag bei 120 mg KOH/g.

### Beispiele 1 und 2 und Vergleichsversuch 1

### Die Herstellung erfindungsgemäßer Klarlacke (Beispiele 1 und 2) und eines nicht erfindungsgemäßen Klarlacks (Vergleichsversuch 1) und ihre Verwendung zur Herstellung farb- und effektgebender Mehrschichtlackierungen

Die erfindungsgemäßen Klarlacke der Beispiele 1 und 2 und der nicht erfindungsgemäße Klarlack des Vergleichsyetsuchs 1 wurden durch Vermischen der in der Tabelle 1 angegebenen Bestandteile hergestellt. Hierzu wurden die Komponenten (A) und (B) jeweils im Gewichtsverhältnis von 2 : 1 miteinander vermischt und anschließend mit 10%, bezogen auf die Klarlacke, eines Verdünners (Lösemittelgemisch aus Xylol, Solventnaphtha, Benzin 135/180, Methoxypropylacetat, Butylacetat, Butylglykolacetat, Ethylethoxypropionat und Dipentene) verdünnt.

**Tabelle 1: Die stoffliche Zusammensetzung der erfindungsgemäßen Klarlacke (Beispiele 1 und 2) und des nicht erfindungsgemäßen Klarlacks (Vergleichsversuchs 1)**

| | | | |
|---|---|---|---|
| **Bestandteil** | **Beispiel 1** | **Beispiel 2** | **Vergleichsversuch 1** |
| Komponente (A): | | | |
| Methacrylatcopolymerisat des Herstellbeispiels 1 | 30 | 30 | 30 |
| Urethanacrylat 1 ^{a)} | 43 | - | - |
| Polyesteracrylat 2 ^{b)} | - | - - | 43 |
| Polyesteracrylat 3 ^{c)} | - | 43 | - |
| Butylacetat | 4,8 | 4,8 | 4,8 |
| Ethylethoxypropionat | 15 | 15 | 15 |
| Methylisoamylketon | 2 | 2 | 2 |
| Byk® 325 ^{d)} | 0,3 | 0,3 | 0,3 |
| Byk® 358 ^{d)} | 0,7 | 0.7 | 0,7 |
| Tinuvin® 292 ^{e)} | 1 | 1 | 1 |
| Tinuvin® 400 ^{e)} | 1 | 1 | 1 |
| Irgacure® 184^{f)} | 1,4 | 1,4 | 1,4 |
| Lucirin® TPO^{f)} | 0,3 | 0,3 | 0,3 |
| Dibutylzinndilaurat | | | |
| (10%ig in Butylacetat) | 0,5 | 0,5 | 0,5 |
| Komponente (B): | | | |
| Desmodur® N 3600 ^{g)} | 56 | 56 | 50 |
| Methylisoamylketon | 22 | 22 | 25 |
| Ethylethoxypropionat | 22 | 22 | 25 |

| | | | |
|---|---|---|---|
| a) Urethanacrylat 1: handelsübliches Urethanacrylat Rahn® 99-664 der Firma Rahn, Acrylatfunktionalität: 3; Hydroxylzahl: 120 mg KOH/g, entsprechend 2,14 meq/g; | | | |
| b) Polyesteracrylat 2: Laromer® 8981 der Firma BASF Aktiengesellschaft; Hydroxylzahl: 80 mg KOH/g, entsprechend 1,4 meq/g; | | | |
| c) Polyesteracrylat 3: Laromer® 8907 der Firma BASF Aktiengesellschaft; Hydroxylzahl: 120 mg KOH/g, entsprechend 2,14 meq/g; | | | |
| d) handelsübliche Verlaufmittel; | | | |
| e) handelsübliche Lichtschutzmittel; | | | |
| f) handelsübliche Photoinitiatoren; | | | |
| g) handelsübliches Polyisocyanat auf der Basis von Hexamethylendiisocyanat der Firma Bayer AG; | | | |

Für die Herstellung der farb- und effektgebenden Mehrschichtlackierungen wurden geschliffene Stahlbleche zunächst mit einem handelsüblichen Zweikomponentenpolyurethanfüller der Firma BASF Coatings AG beschichtet. Der Füller wurde in zwei Spritzgängen appliziert, während 30 Minuten bei 60°C getrocknet und anschließend geschliffen. Anschließend wurde ein Wasserbasislack in zwei Spritzgängen appliziert und während 5 Minuten bei 60°C getrocknet. Danach wurden die Klarlacke 1 und 2 in zwei Spritzgängen mit einer Zwischenablüftzeit von 2,5 Minuten appliziert.

Die applizierten Klarlackschichten der Beispiele 1 und 2 und der Klarlack des Vergleichsversuchs 1 wurden während 5 Minuten abgelüftet, während 15 Minuten bei 60°C getrocknet und anschließend mit UV-Strahlung mit einer Dosis von 1.500 mJ/cm² gehärtet. Die resultierenden Klarlackierungen wiesen eine Schichtdicke von 50 bis 60 µm auf. Die erfindungsgemäßen Mehrschichtlackierungen der Beispiele 1 und 2 wiesen eine hervorragende Appearance auf, die der der Mehrschichtlackierung des Vergleichsversuchs 1 überlegen war.

Zur Bestimmung der Anfangshärte wurde die Pendelhärte der applizierten Klarlackschichten nach König gemessen (Pendelschläge). Die Ergebnisse finden sich in der Tabelle 2. Sie belegen die hohe Anfangshärte der Klarlackierungen der Beispiels 1 und 2 im Vergleich zur Anfangshärte der Klarlackierung des Vergleichsversuchs 1.

In einer zweiten Versuchsserie wurde das Härtungsverhalten der Klarlacke in Schattenzonen von Substraten dadurch simuliert, daß die vorstehend beschriebenen Prüftafeln nicht mit UV-Strahlung gehärtet wurden. Die resultierenden Klarlackierungen der Beispiele 1 und 2 waren nicht klebrig, sondern wiesen eine gute Anfangshärte auf. Dagegen war die Klarlackierung des Vergleichsversuchs 1 klebrig.

| | **Beispiel 1** | **Beispiel 2** | **Vergleichsversuch 1** |
|---|---|---|---|
| Versuchserie 1: | | | |
| Härtung mit UV-Strahlung: | | | |
| nach 5 Tagen | 105 | 100 | 88 |
| nach 10 Tagen | 135 | 130 | 123 |

| Versuchserie 1: | | | |
|---|---|---|---|
| Härtung ohne UV-Strahlung: | | | |
| nach 5 Tagen | 67 | 59 | 19 |
| nach 10 Tagen | 101 | 95 | 43 |

## Patentansprüche

1. Thermisch und mit aktinischer Strahlung (Dual Cure) härtbares Mehrkomponenentensystem, enthaltend
(A) mindestens eine Komponente, enthaltend
(A 1) mindestens einen Bestandteil mit mindestens 1,8 meq/g an isocyanatreaktiven funktionellen Gruppen
(A 2) mindestens einen Bestandteil mit mindestens 1,8 meq/g an isocyanatreaktiven funktionellen Gruppen und mindestens einer funktionellen Gruppe mit mindestens einer mit aktinischer Strahlung aktivierbaren Bindung
und
(B) mindestens eine Komponente, enthaltend mindestens ein Polyisocyanat (B 1).

2. Mehrkomponentensystem nach Anspruch 1, **dadurch gekennzeichnet, daß** die Komponente (B) zusätzlich mindestens einen Bestandteil (B 2) mit mindestens einer Isocyanatgruppe und mindestens einer funktionellen Gruppe mit mindestens einer mit aktinischer Strahlung aktivierbaren Bindung enthält.

3. Mehrkomponentensystem nach Anspruch 1 oder 2, **dadurch gekennzeichnet**, das als mit aktinischer Strahlung aktivierbare Bindungen Kohlenstoff Wasserstoff Einzelbindungen oder Kohlenstoff-Kohlenstoff-, Kohlenstoff-Sauerstoff-, Kohlenstoff-Stickstoff-, Kohlenstoff-Phosphor- oder Kohlenstoff Silizium-Einzelbindungen oder -Doppelbindungen verwendet werden.

4. Mehrkomponentensystem nach Anspruch 3, **dadurch gekennzeichnet, daß** Kohlenstoff-Kohlenstoff-Dopppelbindungen ("Doppelbindungen") verwendet werden.

5. Mehrkomponentensystem nach Anspruch 4, **dadurch gekennzeichnet, daß** die Doppelbindungen als (Meth)Acrylat-, Ethacrylat-, Crotonat-, Cinnamat-, Vinylether-, Vinylester-, Ethenylarylen-, Dicyclopentadienyl-, Norbomenyl-, Isoprenyl-, Isoprenyl-, Isopropenyl-, Allyl- oder Butenylgruppen; Ethenylarylen-, Dicyclopentadienyl-, Norbomenyl-, Isoprenyl-, Isopropenyl-, Allyl- oder Butenylethergruppen oder Ethenylarylen-, Dicyclopentadienyl-, Norbomenyl-, lsoprenyl-, Isopropenyl-, Allyl- oder Butenylestergruppen vorliegen.

6. Mehrkomponentensystem nach einem der Ansprüche 1 bis 5, **dadurch gekennzeichnet, daß** es sich bei den isocyanatreaktiven funktionellen Gruppen um Thiol-, primäre oder sekundäre Amino-, Imino- oder Hydroxylgruppen handelt.

7. Mehrkomponentensystem nach einem der Ansprüche 1 bis 6, **dadurch gekennzeichnet, daß** es sich bei dem Bestandteil (A 1) um oligomere oder polymere, statistisch, alternierend und/oder blockartig aufgebaute lineare und/oder verzweigte und/oder kammartig aufgebaute (Co)Polymerisate von ethylenisch ungesättigten Monomeren, oder um Polyadditionsharze und/oder Polykondensationsharze handelt.

8. Mehrkomponentensystem nach einem der Ansprüche 1 bis 7, **dadurch gekennzeichnet, daß** der Bestandteil (A 2) im statistischen Mittel 3 funktionelle Gruppen mit mindestens einer mit aktinischer Strahlung aktivierbaren Bindung pro Molekül enthält

9. Mehrkomponentensystem nach einem der Ansprüche 1 bis 8, **dadurch gekennzeichnet, daß** es sich bei dem Bestandteil (A 2) um oligomere oder polymere, statistisch, alternierend und/oder blockartig aufgebaute, lineare und/oder verzweigte und/oder kammartig aufgebaute (Co)Polymerisate von ethylenisch ungesättigten Monomeren, oder um Polyadditionsharze und/oder Polykondensationsharze handelt.

10. Mehrkomponentensystem nach einem der Ansprüche 1 bis 9, **dadurch gekennzeichnet, daß** die Komponente (A) und/oder die Komponente (B) mindestens einen mit aktinischer Strahlung härtbaren Reaktiverdünner enthält.

11. Mehrkomponentensystem nach Anspruch 10, **dadurch gekennzeichnet, daß** der mit aktinischer Strahlung härtbare Reaktiverdünner mindestens 5 mit aktinischer Strahlung aktivierbare Bindungen im Molekül enthält.

12. Verwendung des Mehrkomponentensystems gemäß einem der Ansprüche 1 bis 11 als Beschichtungsstoff, Klebstoff oder Dichtungsmasse.

13. Verwendung nach Anspruch 12, **dadurch gekennzeichnet, daß** der Beschichtungsstoff für die Automobilerstlackierung, die Autoreparaturlackierung, die Lackierung von Möbeln, Türen, Fenstern oder Bauwerken im Innen- und Außenbereich sowie für die industrielle Lackierung, inklusive Coil Coating, Container Coating und die Beschichtungen oder Imprägnierung elektrotechnischer Bauteile verwendet wird.

14. Verwendung des Mehrkomponentensystems nach Anspruch 13, **dadurch gekennzeichnet, daß** der Beschichtungsstoff für die Herstellung farb- und/oder effektgebender Mehrschichtlackierungen nach dem Naß-in-Naß-Verfahren verwendet wird.

## Revendications

1. Système à plusieurs composants durcissable par action thermique et par rayonnement actinique (Dual Cure), contenant
A) au moins un composant, contenant
(A 1) au moins un constituant comportant au moins 1,8 méq/g de groupes fonctionnels réactifs vis-à-vis des isocyanates,
(A 2) au moins un constituant comportant au moins 1,8 méq/g de groupes fonctionnels réactifs vis-à-vis des isocyanates et au moins un groupe fonctionnel présentant au moins une liaison activable par rayonnement actinique,
et
B) au moins un composant contenant au moins un polyisocyanate (B 1).

2. Système à plusieurs composants suivant la revendication 1, **caractérisé en ce que** le composant (B) contient en supplément au moins un constituant (B 2) comportant au moins un groupe isocyanate et au moins un groupe fonctionnel présentant au moins une liaison activable par rayonnement actinique.

3. Système à plusieurs composants suivant la revendication 1 ou 2, **caractérisé en ce que**, comme liaisons activables par rayonnement actinique, on utilise des simples liaisons carbone-hydrogène ou des simples liaisons ou doubles liaisons carbone-carbone, carbone-oxygène, carbone-azote, carbone-phosphore ou carbone-silicium.

4. Système à plusieurs composants suivant la revendication 3, **caractérisé en ce qu'**on utilise des doubles liaisons carbone-carbone ("doubles liaisons").

5. Système à plusieurs composants suivant la revendication 4, **caractérisé en ce que** les doubles liaisons se présentent sous la forme de groupes (méth)acrylate, éthacrylate, crotonate, cinnamate, éther vinylique, ester vinylique, éthénylarylène, dicyclopentadiényle, norbornényle, isoprényle, isopropényle, allyle ou butényle, de groupes éther d'éthénylarylène, dicyclopentadiénylique, norbornénylique, isoprénylique, isopropénylique, allylique ou buténylique ou de groupes ester d'éthénylarylène, dicyclopentadiénylique, norbornénylique, isoprénylique, isopropénylique, allylique ou buténylique.

6. Système à plusieurs composants suivant l'une des revendications 1 à 5, **caractérisé en ce que**, pour ce qui concerne les groupes fonctionnels réactifs vis-à-vis des isocyanates, il s'agit de groupes thiol, amino, imino ou hydroxyle primaires ou secondaires.

7. Système à plusieurs composants suivant l'une des revendications 1 à 6, **caractérisé en ce que**, pour ce qui concerne le constituant (A 1), il s'agit de (co)polymères oligomères ou polymères de structure statistique, alternante et/ou de type bloc linéaires et/ou ramifiés et/ou de structure de type peigne de monomères éthyléniquement insaturés, ou de résines de polyaddition et/ou de résines de polycondensation.

8. Système à plusieurs composants suivant l'une des revendications 1 à 7, **caractérisé en ce que** le constituant (A 2) contient en moyenne statistique trois groupes fonctionnels présentant au moins une liaison activable par rayonnement actinique par molécule.

9. Système à plusieurs composants suivant l'une des revendications 1 à 8, **caractérisé en ce que**, pour ce qui concerne le constituant (A 2), il s'agit de (co)polymères oligomères ou polymères à structure statistique, alternante et/ou de type bloc linéaires et/ou ramifiés et/ou de structure de type peigne de monomères éthyléniquement insaturés, ou de résines de polyaddition et/ou de résines de polycondensation.

10. Système à plusieurs composants suivant l'une des revendications 1 à 9, **caractérisé en ce que** le composant (A) et/ou le composant (B) contiennent au moins un diluant réactif durcissable par rayonnement actinique.

11. Système à plusieurs composants suivant la revendication 10, **caractérisé en ce que** le diluant réactif durcissable par rayonnement actinique contient dans la molécule au moins 5 liaisons activables par rayonnement actinique.

12. Utilisation du système à plusieurs composants suivant l'une des revendications 1 à 11, comme matière d'enduction, colle ou masse d'étanchéification.

13. Utilisation suivant la revendication 12, **caractérisée en ce que** la matière d'enduction est utilisée pour le premier laquage d'automobile, le laquage de réparation d'automobile, le laquage de meubles, de portes, de fenêtres ou d'ouvrages du domaine intérieur et extérieur ainsi que pour le laquage industriel, y compris le revêtement de bobines, le revêtement de conteneurs et les revêtements ou l'imprégnation de composants électrotechniques.

14. Utilisation du système à plusieurs composants suivant la revendication 13, **caractérisée en ce que** la matière d'enduction est utilisée pour la préparation de laquages en plusieurs couches colorants et/ou à effet selon un procédé mouillé-sur-mouillé.

## Claims

1. Multicomponent system curable thermally and with actinic radiation (dual cure) and comprising
(A) at least one component comprising
(A1) at least one constituent containing at least 1.8 meq/g of isocyanate-reactive functional groups,
(A2) at least one constituent containing at least 1.8 meq/g of isocyanate-reactive functional groups and at least one functional group having at least one bond which can be activated with actinic radiation,
and
(B) at least one component comprising at least one polyisocyanate (B1).

2. Multicomponent system according to Claim 1, **characterized in that** component (B) additionally comprises at least one constituent (B2) containing at least one isocyanate group and at least one functional group having at least one bond which can be activated with actinic radiation.

3. Multicomponent system according to Claim 1 or 2, **characterized in that** said bonds which can be activated with actinic radiation comprise carbon-hydrogen single bonds or carbon-carbon, carbon-oxygen, carbon-nitrogen, carbon-phosphorus or carbon-silicon single bonds or double bonds.

4. Multicomponent system according to Claim 3, **characterized in that** carbon-carbon double bonds ("double bonds") are used.

5. Multicomponent system according to Claim 4, **characterized in that** the double bonds are present as (meth)acrylate, ethacrylate, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups; or ethenylarylene ester, dicyclopentadienyl ester, norbornenyl ester, isoprenyl ester, isopropenyl ester, allyl ester or butenyl ester groups.

6. Multicomponent system according to any of Claims 1 to 5, **characterized in that** the isocyanate-reactive functional groups are thiol, primary or secondary amino, imino or hydroxyl groups.

7. Multicomponent system according to any of Claims 1 to 6, **characterized in that** constituent (A1) comprises oligomeric or polymeric, random, alternating and/or block linear and/or branched and/or comb (co)polymers of ethylenically unsaturated monomers, or comprises polyaddition resins and/or polycondensation resins.

8. Multicomponent system according to any of Claims 1 to 7, **characterized in that** constituent (A2) contains on average three functional groups having at least one bond which can be activated with actinic radiation per molecule.

9. Multicomponent system according to any of Claims 1 to 8, **characterized in that** constituent (A2) comprises oligomeric or polymeric, random, alternating and/or block linear and/or branched and/or comb (co)polymers of ethylenically unsaturated monomers, or comprises polyaddition resins and/or polycondensation resins.

10. Multicomponent system according to any of Claims 1 to 9, **characterized in that** component (A) and/or component (B) comprise(s) at least one reactive diluent which is curable with actinic radiation.

11. Multicomponent system according to Claim 10, **characterized in that** the reactive diluent curable with actinic radiation contains in the molecule at least 5 bonds which can be activated with actinic radiation.

12. Use of the multicomponent system according to any of Claims 1 to 11 as a coating material, adhesive or sealing compound.

13. Use according to Claim 12, **characterized in that** the coating material is used for automotive OEM finishing, automotive refinishing, the coating of furniture, doors, windows or constructions in the interior and exterior sector and also for industrial coating, including coil coating, container coating, and the coating or impregnation of electrical components.

14. Use of the multicomponent system according to Claim 13, **characterized in that** the coating material is used for producing multicoat colour and/or effect coating systems by the wet-on-wet technique.
